# FASCICULE DE BREVET EUROPEEN

(11) **EP 0 831 040 B1**
(45) Date de publication et mention de la délivrance du brevet: **13.06.2001**
(21) Numéro de dépôt: 97490032.6
(22) Date de dépôt: 22.09.1997
(51) Int. Cl.: B65G 47/51

(54) **Dispositif de stockage d'articles sur une boucle de convoyage**
Einrichtung zum Speichern von Gegenständen auf einer Förderschleife
Device for storing articles on a conveyor loop

(30) Priorité: 24.09.1996 FR 9611828
(43) Date de publication de la demande: 25.03.1998
(73) Titulaire: Setma Sarl, 59560 Comines (FR)
(72) Inventeur: Remericq, Maurice, 59166 Bousbecque (FR)
(74) Mandataire: Ecrepont, Robert

(56) Documents cités:
- DE-U- 9 012 074
- DE-U- 9 420 365
- FR-A- 2 298 494
- FR-A- 2 617 136
- US-A- 4 231 470

## Description

L'invention se rapporte à un dispositif de stockage d'un grand nombre d'articles sur une boucle de convoyage.

L'invention intéresse plus particulièrement, mais non limitativement, un dispositif de stockage d'articles entre deux postes consécutifs d'un atelier de production et/ou de traitement de ces articles.

Un tel dispositif évite la répercussion des arrêts d'un poste sur l'autre et permet de compenser temporairement un déficit existant entre la vitesse de traitement des articles au niveau du poste aval et celle de traitement des articles au niveau du poste amont.

Un tel dispositif est connu par le document FR-A-2 617 136.

Les dispositifs à cet effet sont connus de longue date et, outre un châssis de forme d'enveloppe approximativement parallélépipédique rectangle, ils comprennent en général :
- un élément sans fin qui, constitué de maillons, porte une pluralité de moyens chacun récepteur d'au moins un article,
- des moyens, dit déviateurs, pour la déviation de l'élément sans fin selon un parcours sinueux comprenant notamment une pluralité de brins sensiblement parallèles qui s'étendent chacun approximativement verticalement.

De manière connue :
- le dispositif comprend au moins deux postes, dont un poste de chargement et un poste de déchargement des articles devant lesquels les moyens récepteurs sont destinés à circuler et ces postes sont chacun situés au niveau d'une des extrémités opposées dudit dispositif,
- le dispositif comporte quatre ensembles de moyens déviateurs dans chacun desquels lesdits moyens sont disposés en une nappe sensiblement horizontale et ces ensembles sont organisés de manière à constituer, d'une part, deux ensembles distincts de moyens déviateurs, l'un fixé à la partie supérieure du châssis et l'autre fixé à sa partie inférieure et, d'autre part, un groupe de deux ensembles de moyens déviateurs solidaires d'un élément dit chariot situé entre les deux ensembles distincts précités,
- l'élément sans fin passe sur les moyens déviateurs de manière à constituer, d'une part, un premier faisceau de brins sensiblement parallèles entre l'ensemble de moyens qui est solidaire de la partie supérieure du châssis et l'ensemble de moyens le plus proche situé sur le chariot et, d'autre part, un second faisceau de brins sensiblement parallèles entre le second ensemble de moyens déviateurs porté par le chariot et l'ensemble solidaire de la partie inférieure du châssis, et
- l'élément sans fin coopère avec des moyens moteurs qui sont portés par le châssis et dont le fonctionnement est régi par un moyen de commande et ce en vue de faire circuler tout ou partie de l'élément sans fin sur des moyens déviateurs et, par cela, de faire défiler les moyens récepteur d'articles devant au moins l'un des postes de déchargement et de chargement que comprend le dispositif.

Dans les dispositifs connus ce sont les brins verticaux de l'élément sans fin tendus entre le chariot et la partie supérieure du châssis qui supportent la masse dudit chariot augmentée de celle des articles et de celle des maillons de l'élément sans fin qui pendent sous le chariot.

L'élément sans fin doit donc être extrêmement résistant à la traction, ce qui est pénalisant car le surdimensionnement des maillons de chaque élément sans fin augmente considérablement l'inertie du dispositif.

Le surdimensionnement des maillons de chaque élément sans fin n'est cependant établi que dans des limites compatibles avec le coût et le bon fonctionnement de l'installation et il n'est donc pas possible d'en exclure totalement la rupture.

En général, le défilement des moyens récepteurs d'articles est effectué par pas, ce qui provoque des à-coups dans le fonctionnement du dispositif et peut induire le tangage du chariot.

Outre qu'il perturbe le fonctionnement du dispositif, ce tangage est dangereux car la masse en mouvement est de plusieurs milliers de kilogrammes.

Avec les installations de l'état de la technique, on craint donc en plus les déraillements de l'élément sans fin.

Pour remédier à cet inconvénient, il est connu d'équiper le dispositif de chaînes de synchronisation des déplacements de ces extrémités, mais l'inertie dudit dispositif n'en est pas pour autant réduite.

Un résultat que l'invention vise à obtenir est un dispositif de stockage d'un grand nombre d'articles sur une boucle de convoyage qui permet de remédier aux inconvénients annoncés plus avant.

A cet effet, l'invention a pour objet un dispositif du type précité, lequel dispositif est caractérisé en ce qu'il comprend :
- un moyen assurant les fonctions de support, guidage en translation et déplacement simultané de guidage en translation des points du chariot d'accumulation selon une direction approximativement verticale, ce moyen étant distinct de l'élément sans fin,
- situé au niveau d'au moins l'une des extrémités opposées du dispositif, un chariot auxiliaire qui, indépendant du chariot d'accumulation, comprend un nombre réduit de moyens déviateurs de manière à présenter une masse réduite par rapport à celle du chariot d'accumulation, et
- le moyen de commande de la circulation de l'élément sans fin est un moyen de gestion du fonctionnement des moyens moteurs de circulation de l'élément sans fin et du moyen de support et de déplacement du chariot d'accumulation.

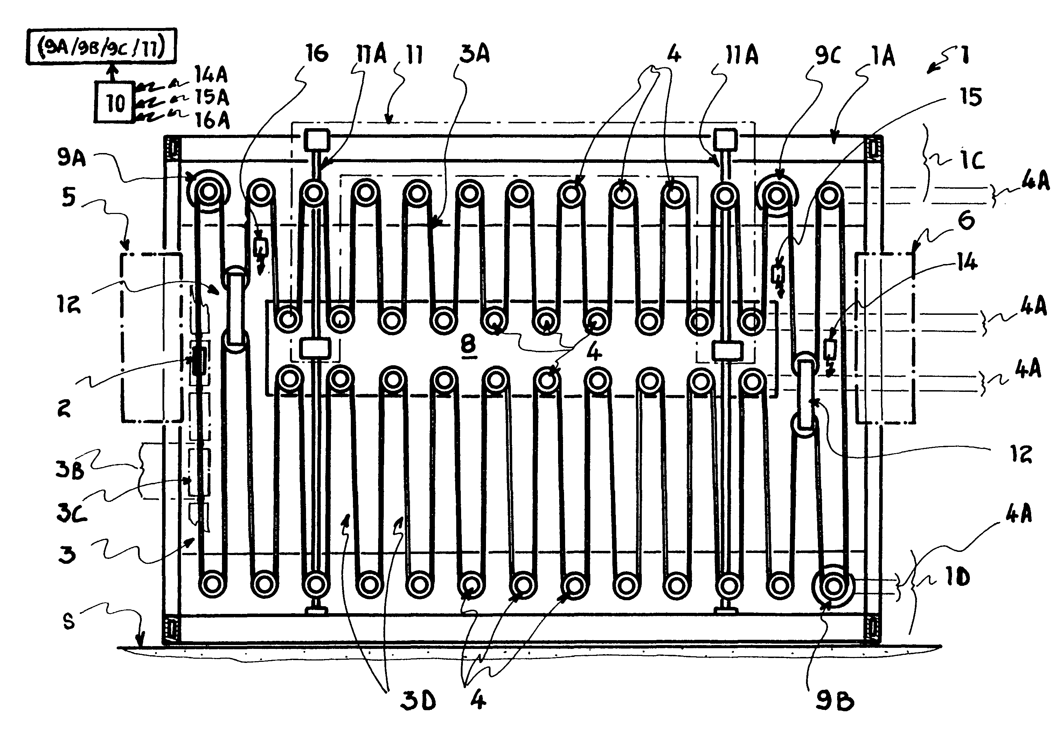

L'invention sera bien comprise à l'aide de la description ci-après faite à titre d'exemple non limitatif en regard du dessin ci-annexé qui représente schématiquement une vue en coupe longitudinale d'un dispositif selon l'invention.

En se reportant au dessin, on voit un dispositif 1 de stockage d'un grand nombre d'articles 2 sur une boucle 3 de convoyage.

Outre un châssis lA qui, constitué de poutres, s'étend au dessus du sol S et affecte une forme d'enveloppe approximativement parallélépipédique rec-tangle comprenant une partie supérieure 1C et une partie inférieure 1D, le dispositif 1 comprend :
- un élément sans fin 3A qui, notamment, constitué de maillons 3B, porte une pluralité de moyens 3C chacun récepteur d'au moins un article 2, et
- des moyens 4, dit déviateurs, pour la déviation des maillons 3B de l'élément sans fin 3A selon un parcours sinueux comprenant notamment une pluralité brins sensiblement parallèles 3D qui s'étendent approximativement verticalement.

L'élément sans fin comprend, par exemple, deux chaines sans fin qui sont disposées dans des plans approximativement parallèles et entre lesquels sont disposées des balancelles (non représentées) constituant les moyens 3C récepteurs des articles.

Sur la figure, seule une des chaines sans fin est symbolisée.

De manière connue :
- le dispositif 1 comprend au moins deux postes 5, 6, dont un poste 5 de chargement et un poste 6 de déchargement des articles 2 devant lesquels les moyens récepteurs 3C sont présentés sur un brin 3D approximativement vertical et destinés à circuler devant les dits postes 5, 6, quant à eux situés au niveau d'une des extrémités opposées dudit dispositif 1,
- le dispositif 1 comporte quatre ensembles 4A de moyens 4 déviateurs dans chacun desquels lesdits moyens 4 sont disposés en une nappe sensiblement horizontale et, ces ensembles 4A sont organisés de manière à constituer, d'une part, deux ensembles distincts de moyens 4 déviateurs, l'un fixé à la partie supérieure 1C du châssis 1A et l'autre fixé à sa partie inférieure 1D et, d'autre part, un groupe de deux ensembles 4A de moyens 4 déviateurs solidaires d'un élément 8 dit chariot d'accumulation, qui est situé entre les deux ensembles 4A distincts précités,
- l'élément sans fin 3A passe sur les moyens 4 déviateurs de manière à constituer, d'une part, un premier faisceau de brins sensiblement parallèles entre l'ensemble 4A de moyens 4 qui est solidaire de la partie supérieure 1C du châssis 1A et l'ensemble de moyens 4 le plus proche situé sur le chariot 8 d'accumulation et, d'autre part, un second faisceau de brins sensiblement parallèles entre le second ensemble 4A de moyens déviateurs porté par le chariot et l'ensemble 4A solidaire de la partie inférieure 1D du châssis, et
- l'élément 3A sans fin coopère avec des moyens 9A, 9B, 9C moteurs qui sont portés par le châssis 1A et dont le fonctionnement est régi par un moyen 10 de commande, ce en vue de faire circuler tout ou partie de l'élément sans fin sur des moyens déviateurs et, par cela, de faire défiler les moyens 3C récepteurs d'articles 2 devant au moins l'un des postes de déchargement 6 et de chargement 5 que comprend le dispositif 1.

De manière remarquable, le dispositif comprend :
- un moyen 11 assurant les fonctions de support, guidage en translation et déplacement simultané de guidage en translation des points du chariot 8 d'accumulation selon une direction approximativement verticale, ce moyen étant distinct de l'élément sans fin,
- situé au niveau d'au moins l'une des extrémités opposées du dispositif 1, un chariot auxiliaire 12 qui, indépendant du chariot 8 d'accumulation, comprend un nombre réduit de moyens 4 déviateurs de manière à présenter une masse réduite par rapport à celle du chariot 8 d'accumulation, et
- le moyen 10 de commande de la circulation de l'élément sans fin est un moyen de gestion du fonctionnement des moyens 9A, 9B, 9C moteurs de circulation de l'élément sans fin et du moyen 11 de support et de déplacement du chariot 8 d'accumulation.

Ces particularités techniques, en se conjuguant, permettent non seulement de réduire notablement les à-coups de fonctionnement du dispositif mais, également, d'optimiser sa vitesse de réaction à un ordre, du fait de la moindre inertie de chaque chariot auxiliaire 12 comparativement à celle du chariot 8 d'accumulation.

De préférence, le dispositif comprend deux chariots auxiliaires 12 qui sont chacun situés au niveau de l'une de ses extrémités opposées.

Dans une forme de réalisation, le moyen 11 de support et de déplacement simultané des points du chariot 8 d'accumulation comprend des vérins 11A qui, d'une part, sont disposés pour agir sur le chariot 8 approximativement au niveau de ses angles et, d'autre part, sont indexés et commandés par à un moyen 10 à cet effet.

Avantageusement mais non limitativement, chaque chariot auxiliaire comprend deux groupes de deux organes déviateurs 4 dont un groupe supérieur et un groupe inférieur.

Par vérin à vis, on désigne notamment un ensemble comprenant :
- une vis qui s'étend approximativement verticalement sur sensiblement toute la hauteur du chassis lA et est guidée en rotation mais immobilisée en translation selon son axe longitudinal,
- un élément écrou porté par le chariot 8 d'accumulation immobilisé sur celui-ci et traversé par la vis,
- un moyen moteur d'entrainement en rotation de la vis.

De manière remarquable, les moyens 9A, 9B, 9C moteurs de l'élément 3A sans fin sont au moins au nombre de deux et agissent chacun au niveau d'une des extrémités du dispositif, sur l'un des moyens déviateurs de cette extrémité.

De manière également remarquable, le dispositif comprend au moins trois moyens moteurs 9A, 9B, 9C de l'élément sans fin dont :
- au moins deux moyens moteurs 9A, 9B, chacun disposé pour commander la circulation de l'élément sans fin directement au niveau du poste de chargement et déchargement,
- au moins un moyen moteur 9C disposé pour commander la circulation de l'élément sans fin essentiellement sur les moyens de renvoi du chariot d'accumulation 8.

Le dispositif comprend également des moyens 14, 15, 16 de détection de la position des chariots d'accumulation 8 et auxiliaire 12, lesquels délivrent les informations 14A, 15A, 16A de position notamment au moyen 10 de gestion du fonctionnement des moyens moteurs 9A, 9B, 9C.

On trouvera ci-aprés la description du fonctionnement d'un dispositif de stockage comprenant deux chariots auxiliaires dont l'un dit amont, car situé au niveau du poste de chargement et l'autre dit aval, car situé au niveau du poste de déchargement.

Dans un mode de fonctionnement normal (compte tenu de la situation des postes 5, 6 des postes de chargement et de déchargement), le chariot auxiliaire amont descend pour permettre l'entrée des articles sur la boucle de convoyage tandis que le chariot auxiliaire aval monte, pour le cas échéant, permettre aux articles de quitter la bande de convoyage par le poste à cet effet.

Eventuellement, le chariot auxiliaire aval vient en butée supérieure et y reste, la régulation étant effectuée par le chariot auxiliaire amont.

Dans ce cas, lorsque le chariot auxiliaire amont vient en butée inférieure, on commande la descente du chariot d'accumulation et la remontée du dit chariot auxiliaire amont.

Egalement, dans ce cas (chariot auxiliaire aval en butée supérieure), lorsque le chariot auxiliaire amont vient en butée supérieure alors on commande la remontée du chariot d'accumulation et la descente du dit chariot auxiliaire amont.

Que la cadence d'entrée des articles sur la boucle de convoyage soit supérieure ou inférieure à la cadence de sortie des articles, le mode de fonctionnement précité convient.

## Revendications

1. Dispositif (1) de stockage d'un grand nombre d'articles (2) sur une boucle (3) de convoyage,
lequel dispositif comprend :
- un châssis (lA) qui, constitué de poutres (1B), affecte une forme d'enveloppe approximativement parallélépipédique rectangle comprennant une partie supérieure (1C) et une partie inférieure (1D),
- un élément sans fin (3A) qui porte une pluralité de moyens (3C) chacun récepteur d'au moins un article (2),
- quatre ensembles (4A) de moyens (4) déviateurs dans chacun desquels lesdits moyens (4) sont disposés en une nappe sensiblement horizontale et, ces ensembles (4A) sont organisés de manière à constituer, d'une part, deux ensembles distincts de moyens (4) déviateurs, l'un fixé à la partie supérieure (1C) du châssis (1A) et l'autre fixé à sa partie inférieure (1D) et, d'autre part, un groupe de deux ensembles (4A) de moyens (4) déviateurs solidaires d'un élément (8) dit chariot d'accumulation, qui est situé entre les deux ensembles (4A) distincts précités,
dans ce dispositif, l'élément sans fin (3A) passe sur les moyens (4) déviateurs de manière à constituer, d'une part, un premier faisceau de brins sensiblement parallèles entre l'ensemble (4A) de moyens (4) qui est solidaire de la partie supérieure (1C) du châssis (1A) et l'ensemble de moyens (4) le plus proche situé sur le chariot (8) d'accumulation et, d'autre part, un second faisceau de brins parallèles entre le second ensemble (4A) de moyens déviateurs porté par le chariot et l'ensemble (4A) solidaire de la partie inférieure (1D) du châssis,
ce dispositif étant **CARACTERISE** en ce qu'il comprend :
- un moyen (11) assurant les fonctions de support, guidage en translation et de déplacement simultané en translation des points du chariot (8) d'accumulation selon une direction approximativement verticale, ce moyen étant distinct de l'élément sans fin,
- situé au niveau d'au moins l'une des extrémités opposées du dispositif (1), un chariot auxiliaire (12) qui, indépendant du chariot (8) d'accumulation, comprend un nombre réduit de moyens (4) déviateurs de manière à présenter une masse réduite par rapport à celle du chariot (8) d'accumulation, et
- le moyen (10) de commande de la circulation de l'élément sans fin est un moyen (13) de gestion du fonctionnement des moyens (9A, 9B, 9C) moteurs de circulation de l'élément sans fin et du moyen (11) de support et de déplacement du chariot (8) d'accumulation.

2. Dispositif selon la revendication 1 et dans lequel l'élément (3A) sans fin coopère avec des moyens (9A, 9B, 9C) moteurs qui sont portés par le châssis (1A) et dont le fonctionnement est régi par un moyen (10) de commande **caractérisé** en ce que les moyens (9A, 9B, 9C) moteurs de l'élément (3A) sans fin sont au moins au nombre de deux et agissent chacun au niveau d'une des extrémités du dispositif, sur l'un des moyens déviateurs de cette extrémité.

3. Dispositif selon la revendication 1 ou 2 **caractérisé** en ce qu'il comprend deux chariots auxiliaires (12) qui sont chacun situés au niveau de l'une de ses extrémités opposées.

4. Dispositif selon l'une quelconque des revendications 1 à 3 **caractérisé** en ce que le moyen (11) de support et de déplacement simultané des points du chariot (8) d'accumulation comprend des vérins (11A) qui, d'une part, sont disposés pour agir sur le chariot (8) approximativement au niveau de ses angles et, d'autre part, sont indexés et commandés par à un moyen (10) à cet effet.

5. Dispositif selon la revendication 4 **caractérisé** en ce que le verin (11A) consistent en des vérins à vis.

6. Dispositif selon l'une quelconque des revendications 1 à 5 **caractérisé** en ce qu'il comprend au moins trois moyens moteurs (9A, 9B, 9C) de l'élément sans fin dont :
- au moins deux moyens moteurs (9A, 9B), chacun disposé pour commander la circulation de l'élément sans fin directement au niveau du poste de chargement et déchargement,
- au moins un moyen moteur (9C) disposé pour commander la circulation de l'élément sans fin essentiellement sur les moyens de renvoi du chariot d'accumulation (8).

## Claims

1. A device (1) for storing a large number of articles (2) on a conveying loop (3), which device comprises:
- a framework (1A) which, made up of girders (1B), assumes the form of a substantially rectangular-parallelepipedal casing comprising an upper part (1C) and a lower part (1D),
- an endless element (3A) which bears a plurality of means (3C) which are each to receive at least one article (2),
- four sets (4A) of deviation means (4), in each of which the said means (4) are arranged on a substantially horizontal plane, and these sets (4A) are arranged so as to constitute, on the one hand, two separate sets of deviation means (4), the one secured to the upper part (1C) of the framework (1A) and the other secured to its lower part (1D) and, on the other hand, a group of two sets (4A) of deviation means (4) integral with an element (8), referred to as an accumulation carriage, located between the two above-mentioned separate sets (4A),
in this device, the endless element (3A) runs over the deviation means (4) so as to constitute, on the one hand, a first group of substantially parallel strands between the set (4A) of means (4) which is integral with the upper part (1C) of the framework (1A) and the closest means set located on the accumulation carriage (8) and, on the other hand, a second group of parallel strands between the second set (4A) of deviation means borne by the carriage and the set (4A) integral with the lower part (1D) of the framework,
this device being characterised in that it comprises:
- a means (11) to provide support, translational guiding and simultaneous translational displacement of the points of the accumulation carriage (8) in a substantially vertical direction, this means being separate from the endless element,
- located at at least one of the opposite ends of the device (1), an auxiliary carriage (12) which, independent of the accumulation carriage (8), has a smaller number of deviation means (4) so as to have a lower weight than the accumulation carriage (8), and
- the means (10) for controlling the circulation of the endless element is a means (13) for controlling the operation of the motive means (9A, 9B, 9C) for circulation of the endless element and for controlling the means (11) for support and displacement of the accumulation carriage (8).

2. A device according to Claim 1 and in which the endless element (3A) cooperates with motive means (9A, 9B, 9C) which are borne by the framework (1A) and whose operation is controlled by a control means (10), characterised in that the motive means (9A, 9B, 9C) of the endless element (3A) are at least two in number and each act, at one of the ends of the device, on one of the deviation means of this end.

3. A device according to Claim 1 or 2, characterised in that it comprises two auxiliary carriages (12) each of which is located at one of its opposite ends.

4. A device according to any one of Claims I to 3, characterised in that the means (11) for support and simultaneous displacement of the points of the accumulation carriage (8) comprises jacks (11A) which, on the one hand, are arranged to act on the carriage (8) substantially at its corners and, on the other hand, are adjusted and controlled by a means (10) for that purpose.

5. A device according to Claim 4, characterised in that the jacks (11A) consist of screw jacks.

6. A device according to any one of Claims 1 to 5, characterised in that it comprises at least three motive means (9A, 9B, 9C) of the endless element, of which:
- at least two motive means (9A, 9B), each arranged to control the circulation of the endless element directly at the loading and unloading station,
- at least one motive means (9C) arranged to control the circulation of the endless element essentially on the return means of the accumulation carriage (8).

## Patentansprüche

1. Vorrichtung (1) zum Speichern einer großen Zahl von Gegenständen (2) auf einer Förderschleife (3), welche folgendes aufweist:
- einen Rahmen (1A), der aus Trägern (1B) besteht und eine Umschließung ausbildet, welche in etwa die Form eines rechteckigen Parallelepipeds besitzt und einen oberen Abschnitt (1C) und einen unteren Abschnitt (1D) umfasst,
- ein Endlosteil (3A), das eine Vielzahl von Einrichtungen (3C) trägt, von denen jede mindestens einen Gegenstand (2) aufnimmt,
- vier Baugruppen (4A) von Umlenkeinrichtungen (4), wobei in jeder derselben die Einrichtungen (4) in einem im wesentlichen horizontalen Wickel angeordnet sind und diese Baugruppen (4A) in der Weise aufgebaut sind, dass sie zum einen zwei getrennte Baugruppen mit Umlenkeinrichtungen (4) bilden, wovon die eine im oberen Abschnitt (1C) des Rahmens (1A) und die andere in dessen unterem Abschnitt (1D) befestigt ist, und zum anderen eine Gruppe von zwei Baugruppen (4A) von Umlenkeinrichtungen, die fest mit einem als Sammelschlitten bezeichneten Element (8) verbunden sind, der sich zwischen den beiden getrennten Baugruppen (4A) befindet,
- wobei in dieser Vorrichtung das Endlosteil (3A) über die Umlenkeinrichtungen (4) in der Weise läuft, dass zum einen ein erstes Bündel von im wesentlichen parallelen Abschnitten zwischen der Baugruppe (4A) von Einrichtungen (4), die fest mit dem oberen Abschnitt (1C) des Rahmens (1A) verbunden ist, und der nächstgelegenen Baugruppe (4) gebildet ist, die sich auf dem Sammelschlitten (8) befindet, und zum anderen ein zweites Bündel von parallelen Abschnitten zwischen der zweiten Baugruppe (4A) der Umlenkeinrichtungen, die auf dem Schlitten gelagert ist, und der fest mit dem oberen Abschnitt (1D) des Rahmens verbundenen Baugruppe (4A) verbunden ist,
dadurch **GEKENNZEICHNET**, dass sie folgendes aufweist:
- eine Einrichtung (11), welche die Funktionen der Abstützung, Führung unter Verschiebung und der gleichzeitigen Verlagerung untere Verschiebung der Punkte des Sammelschlittens (8) in einer in etwa vertikalen Richtung gewährleistet, wobei diese Einrichtung verschieden von dem Endlosteil ist,
- einen Hilfsschlitten (12), der sich in Höhe von mindestens einem der gegenüberliegenden Enden der Vorrichtung (1) befindet und unabhängig vom Sammelschlitten (8) eine geringere Anzahl von Umlenkeinrichtungen (4) in der Form aufweist, dass er, bezogen auf die Masse des Sammelschlittens (8), eine geringere Masse aufweist, und
- dass die Einrichtung (10) zum Steuern des Umlaufs des Endlosteils eine Einrichtung (13) zum Steuern des Betriebs der Antriebseinrichtungen (9A, 9B, 9C) für den Umlauf des Endlosteils und der Abstützeinrichtung (11) sowie der Verlagerung des Sammelschlittens (8) ist.

2. Vorrichtung nach Anspruch 1, bei welcher das Endlosteil (3A) mit Antriebseinrichtungen (9A, 9B, 9C) zusammenwirkt, die auf dem Rahmen (1A) gelagert sind und deren Betrieb von einer Steuereinrichtung (10) gesteuert wird,
dadurch gekennzeichnet, dass die Antriebseinrichtung (9A, 9B, 9C) für das Endlosteil mindestens in zweifacher Ausführung vorgesehen sind und jeweils in Höhe eines der Enden der Vorrichtung auf eine der Umlenkeinrichtungen an diesem Ende einwirken.

3. Vorrichtung nach Anspruch 1 oder 2, dadurch **gekennzeichnet,** dass sie zwei Hilfsschlitten (12) aufweist, welche sich jeweils in Höhe eines der entgegengesetzten Enden der Vorrichtung befinden.

4. Vorrichtung nach einem der Ansprüche 1 bis 3, dadurch **gekennzeichnet,** dass die Einrichtung (11) zur Abstützung und gleichzeitigen Verlagerung von Punkten auf dem Sammelschlitten (8) Steller (11A) aufweist, welche zum einen so angeordnet sind, dass sie in etwa in Höhe von dessen Winkeln auf den Schlitten (8) einwirken, und zum anderen zu diesem Zweck von einer Einrichtung (10) positioniert und angesteuert werden.

5. Vorrichtung nach Anspruch 4, dadurch **gekennzeichnet**, dass die Steller (11A) aus Schraubenwinden bestehen.

6. Vorrichtung nach einem der Ansprüche 1 bis 5, dadurch **gekennzeichnet**, dass sie mindestens drei Antriebseinrichtungen (9A, 9B, 9C) für das Endlosteil aufweist, von denen
- mindestens zwei Antriebseinrichtungen (9A, 9B) jeweils zum Steuern des Umlaufs des Endlosteils direkt in Höhe der Beschickungs- und Austragsstation angeordnet sind,
- und mindestens eine Antriebseinrichtung (9C) zum Steuern des Umlaufs des Endlosteils im wesentlichen auf den Einrichtungen zur Rückstellung des Sammelschlittens (8) vorgesehen sind.
